# EUROPEAN PATENT APPLICATION

(11) **EP 4 210 368 A1**
(43) Date of publication of application: **12.07.2023**
(21) Application number: 21874202.1
(22) Date of filing: 08.09.2021
(51) Int. Cl.: H04W 12/06

(54) **AUTHENTICATION METHOD AND APPARATUS THEREOF**

(30) Priority: 30.09.2020 CN 202011070319
(71) Applicant: Huawei Technologies Co., Ltd., Shenzhen, Guangdong 518129 (CN)
(72) Inventor: ZHOU, Runze, Shenzhen, Guangdong 518129 (CN); YANG, Mingyue, Shenzhen, Guangdong 518129 (CN); CHEN, Zhongping, Shenzhen, Guangdong 518129 (CN)
(74) Representative: Gill Jennings & Every LLP
(86) International application number: PCT/CN2021/117151
(87) International publication number: WO 2022/068541

(57) **Abstract**

Embodiments of this application disclose an authentication method and an apparatus therefor, which may be applied to a relay access scenario. The method includes: A first device receives a first request from a second device, where when the second device is a terminal device, the first request is used by the target remote device to request to access a network; or when the second device is a network element, the first request is for requesting to determine whether the target remote device has permission to access the network; and the first device sends first information to the second device, where the first information indicates whether the target remote device has permission to access the network. According to embodiments of this application, it can be determined whether the target remote device has permission to access the network, and this helps improve network security.

## Description

This application claims priority to Chinese Patent Application No. 202011070319.3, filed with the China National Intellectual Property Administration on September 30, 2020 and entitled "AUTHENTICATION METHOD AND APPARATUS THEREFOR", which is incorporated herein by reference in its entirety.

### TECHNICAL FIELD

This application relates to the field of communication technologies, and in particular, to an authentication method and an apparatus therefor.

### BACKGROUND

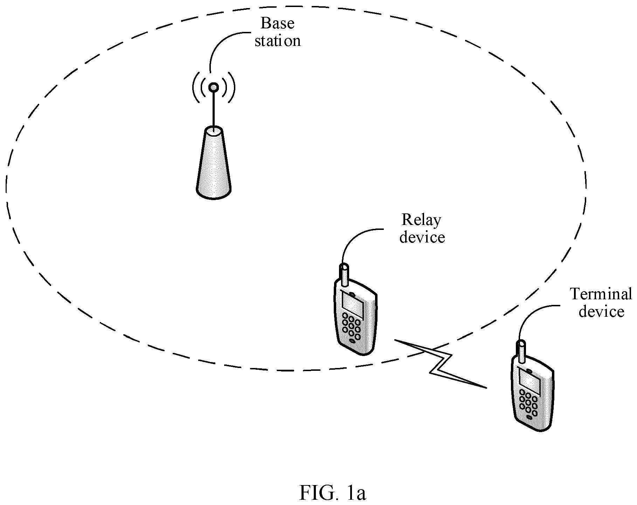

The relay (relay) technology is one of key technologies in modem wireless communication systems. The relay technology is used to increase system capacity. FIG. 1a is a schematic diagram of a relay communication scenario. It can be learned from FIG. 1a that a device (referred to as a remote device) outside network coverage may access a network through a device (referred to as a relay device) within the network coverage. Further, the remote device may obtain various communication services. In FIG. 1a, a slashed circle represents coverage of a base station.

However, with the development of the relay technology, more remote devices access a network through relay devices, and this results in low network security. For example, a remote device wants to access a network service via a relay device, and a network that provides the service verifies whether all access devices have access permission. However, the remote device accesses the network via the relay device, and the network verification may be bypassed.

### SUMMARY

Embodiments of this application provide an authentication method and an apparatus therefor, to determine whether a target remote device has permission to access a network, and this helps improve network security.

According to a first aspect, an embodiment of this application provides an authentication method, and the method includes: A first device receives a first request from a second device, where the first request includes an identifier of a target remote device; and when the second device is a terminal device, the first request is used by the target remote device to request to access a network; or when the second device is a network element, the first request is for requesting to determine whether the target remote device has permission to access a network; and the first device sends first information to the second device, where the first information indicates whether the target remote device has permission to access a network

In this technical solution, it may be determined whether the target remote device has permission to access the network, to prevent a remote device that has no access permission from accessing a network, and this helps improve network security.

In an implementation, the method may be further include: The first device determines whether the target remote device has permission to access the network.

In an implementation, a specific implementation in which the first device determines whether the target remote device has permission to access a network may be: If the identifier of the target remote device exists in a target identifier list, the first device determines that the target remote device has permission to access the network, where the target identifier list includes one or more target identifiers, and the target identifier indicates a remote device that has permission to access the network.

In an implementation, the first request further includes a network identifier; the first information specifically indicates whether the target remote device has permission to access a network indicated by the network identifier; and when the second device is a terminal device, the first request is specifically used by the target remote device to request to access the network indicated by the network identifier; or when the second device is a network element, the first request is specifically for requesting to determine whether the target remote device has permission to access the network indicated by the network identifier.

In an implementation, the method may further include: The first device sends an authentication request to the third device, where the authentication request includes an identifier of the target remote device, and the authentication request is for requesting to determine whether the target remote device has permission to access the network; and the first device receives authentication result information from the third device, where the authentication result information indicates whether the target remote device has permission to access the network.

In an implementation, when the identifier of the target remote device exists in the target identifier list, the authentication result information indicates that the target remote device has permission to access the network, and the target identifier list includes one or more target identifiers. The target identifier indicates a remote device that has permission to access the network.

In an implementation, the first request and the authentication request each further include a network identifier, and the authentication request is specifically for requesting to determine whether the target remote device has permission to access a network indicated by the network identifier; the first information and the authentication result information each specifically indicate whether the target remote device has permission to access the network indicated by the network identifier; and when the second device is a terminal device, the first request is specifically used by the target remote device to request to access the network indicated by the network identifier; or when the second device is a network element, the first request is specifically for requesting to determine whether the target remote device has permission to access the network indicated by the network identifier.

In an implementation, the first request may be further for requesting to allocate a network address to the target remote device; and when the target remote device has permission to access a network, the first information may include a target network address allocated to the target remote device.

In an implementation, the method may further include: The first device sends a network address allocation request to a fourth device, where the network address allocation request is for requesting to obtain network addresses in a first quantity; the first device receives the network addresses in the first quantity from the fourth device, where the network addresses in the first quantity are sent when the first quantity is less than or equal to a second quantity; the second quantity is a quantity of remote devices that have permission to access the network; and the network addresses in the first quantity include the target network address.

In this technical solution, in one aspect, the network addresses greater than the second quantity are allocated for relay access can be avoided, in other words, a case in which the quantity of allocated network addresses is greater than the quantity of required network addresses can be avoided. This helps avoid wasting network addresses. In another aspect, when the fourth device is a device being responsible for allocating a network address, and the first quantity is multiple, the fourth device allocates multiple network addresses at a time, so that the following case can be avoided: When different remote devices initiate a network access request, the first device needs to request the fourth device to allocate a network address to the remote device again. Therefore, allocating multiple network addresses at a time helps reduce unnecessary interaction between the first device and the fourth device, to help save resources.

According to a second aspect, an embodiment of this application provides another authentication method, and the method includes: A second device sends a first request to a first device, where the first request includes an identifier of a target remote device, and when the second device is a terminal device, the first request is used by the target remote device to request to access a network; or when the second device is a network element, the first request is for requesting to determine whether the target remote device has permission to access a network; and the second device receives first information from the first device, where the first information indicates whether the target remote device has permission to access the network.

In this technical solution, it may be determined whether the target remote device has permission to access the network, to prevent a remote device that has no access permission from accessing the network, and this helps improve network security.

In an implementation, the first request further includes an identifier of the network; the first information specifically indicates whether the target remote device has permission to access a network indicated by the network identifier; and when the second device is a terminal device, the first request is specifically used by the target remote device to request to access the network indicated by the network identifier; or when the second device is a network element, the first request is specifically for requesting to determine whether the target remote device has permission to access the network indicated by the network identifier.

In an implementation, the first request may be further for requesting to allocate a network address to the target remote device; and when the target remote device has permission to access a network, the first information includes a target network address allocated to the target remote device.

According to a third aspect, an embodiment of this application provides a communication apparatus. The communication apparatus has some or all functions of implementing the first device in the method example according to the first aspect. For example, functions of the communication apparatus may have functions in some or all embodiments of this application or may have a function of independently implementing any embodiment in this application. The function may be implemented by hardware, or may be implemented by hardware executing corresponding software. The hardware or software includes one or more units or modules corresponding to the foregoing function.

In an implementation, a structure of the communication apparatus may include a processing unit and a communication unit. The processing unit is configured to support the communication apparatus in performing a corresponding function in the foregoing method. The communication unit is configured to support communication between the communication apparatus and another device. The communication apparatus may further include a storage unit. The storage unit is configured to be coupled to the processing unit and the sending unit, and stores a computer program and data that are necessary for the communication apparatus.

In an implementation, the communication apparatus includes: a processing unit, configured to invoke a communication unit to receive a first request from a second device, where the first request includes an identifier of a target remote device; and when the second device is a terminal device, the first request is used by the target remote device to request to access a network; or when the second device is a network element, the first request is for requesting to determine whether the target remote device has permission to access a network; and the processing unit is further configured to invoke the communication unit to send first information to the second device, where the first information indicates whether the target remote device has permission to access the network.

For example, the processing unit may be a processor, the communication unit may be a transceiver or a communication interface, and the storage unit may be a memory.

In an implementation, the communication apparatus includes: a processor, configured to invoke a transceiver to receive a first request from a second device, where the first request includes an identifier of a target remote device, and when the second device is a terminal device, the first request is used by the target remote device to request to access a network; or when the second device is a network element, the first request is for requesting to determine whether the target remote device has permission to access a network; and the processor is further configured to invoke the transceiver to send first information to the second device, where the first information indicates whether the target remote device has permission to access the network.

According to a fourth aspect, an embodiment of this application provides another communication apparatus. The communication apparatus has some or all functions of implementing the second device in the method example according to the second aspect. For example, functions of the communication apparatus may have functions in some or all embodiments of this application or may have a function of independently implementing any embodiment in this application. The function may be implemented by hardware, or may be implemented by hardware executing corresponding software. The hardware or software includes one or more units or modules corresponding to the foregoing function.

In an implementation, a structure of the communication apparatus may include a processing unit and a communication unit. The processing unit is configured to support the communication apparatus in performing a corresponding function in the foregoing method. The communication unit is configured to support communication between the communication apparatus and another device. The communication apparatus may further include a storage unit. The storage unit is configured to be coupled to the processing unit and the sending unit, and stores a computer program and data that are necessary for the communication apparatus.

In an implementation, the communication apparatus includes: a processing unit, configured to invoke a communication unit to send a first request to a first device, where the first request includes an identifier of a target remote device, and when the communication apparatus is an apparatus in a terminal device, the first request is used by the target remote device to request to access a network; or when the communication apparatus is an apparatus in a network element, the first request is for requesting to determine whether the target remote device has permission to access a network; and the processing unit is further configured to invoke the communication unit to receive first information from the first device, where the first information indicates whether the target remote device has permission to access the network.

For example, the processing unit may be a processor, the communication unit may be a transceiver or a communication interface, and the storage unit may be a memory.

In an implementation, the communication apparatus includes: a processor, configured to invoke a transceiver to send a first request to a first device, where the first request includes an identifier of a target remote device, and when the communication apparatus is an apparatus in a terminal device, the first request is used by the target remote device to request to access a network; or when the communication apparatus is an apparatus in a network element, the first request is for requesting to determine whether the target remote device has permission to access a network; and the processor is further configured to invoke the transceiver to receive first information from the first device, where the first information indicates whether the target remote device has permission to access the network.

According to a fifth aspect, an embodiment of the present invention provides a computer-readable storage medium, where the computer-readable storage medium stores a computer program, the computer program includes program instructions, and when the program instructions are executed by a communication apparatus, the communication apparatus is enabled to perform the method in the first aspect.

According to a sixth aspect, an embodiment of the present invention provides a computer-readable storage medium where the computer-readable storage medium stores a computer program, the computer program includes program instructions, and when the program instructions are executed by a communication apparatus, the communication apparatus is enabled to perform the method in the second aspect.

According to a seventh aspect, this application further provides a computer program product including a computer program. When the computer program product is run on a computer, the computer is enabled to perform the method according to the first aspect.

According to an eighth aspect, this application further provides a computer program product including a computer program. When the computer program product is run on a computer, the computer is enabled to perform the method in the second aspect.

According to a ninth aspect, this application provides a chip system. The chip system includes at least one processor and an interface, and is configured to support a first device in implementing a function in the first aspect, for example, determining or processing at least one of data and information in the foregoing method. In a possible design, the chip system further includes a memory, and the memory is used to store a computer program and data that are necessary for the first device. The chip system may include a chip, or may include a chip and another discrete component.

According to a tenth aspect, this application provides a chip system. The chip system includes at least one processor and an interface, and is configured to support a second device in implementing a function in the second aspect, for example, determining or processing at least one of data and information in the foregoing method. In a possible design, the chip system further includes a memory, and the memory is used to store a computer program and data that are necessary for the second device. The chip system may include a chip, or may include a chip and another discrete component.

### BRIEF DESCRIPTION OF DRAWINGS

FIG. 1a is a schematic diagram of a scenario of relay communication according to an embodiment of this application;
FIG. 1b is a schematic diagram of an architecture of a communication system according to an embodiment of this application;
FIG. 2a is a schematic flowchart of an authentication method according to an embodiment of this application;
FIG. 2b is a schematic diagram of a process in which a first device requests a fourth device to allocate an IP address according to an embodiment of this application;
FIG. 2c is a schematic diagram of a process in which a first device requests a fifth device to allocate an IP address according to an embodiment of this application;
FIG. 3a is a schematic flowchart of another authentication method according to an embodiment of this application;
FIG. 3b is a schematic diagram of a scenario in which an IP address is pre-allocated to a remote device (including a target remote device) according to an embodiment of this application;
FIG. 4a is a schematic flowchart of still another authentication method according to an embodiment of this application;
FIG. 4b is a schematic diagram of a scenario in which both a device responsible for authenticating and a device responsible for allocating an IP address to a target remote device are a third device according to an embodiment of this application;
FIG. 4c is a schematic diagram of a scenario in which a device responsible for authenticating and a device responsible for allocating an IP address to a target remote device are different devices according to an embodiment of this application;
FIG. 5 is a schematic diagram of a structure of a communication apparatus according to an embodiment of this application;
FIG. 6 is a schematic diagram of a structure of another communication apparatus according to an embodiment of this application; and
FIG. 7 is a schematic diagram of a structure of a chip according to an embodiment of this application.

### DESCRIPTION OF EMBODIMENTS

To better understand the authentication method disclosed in embodiments of this application, the following first describes a communication system to which embodiments of this application are applicable.

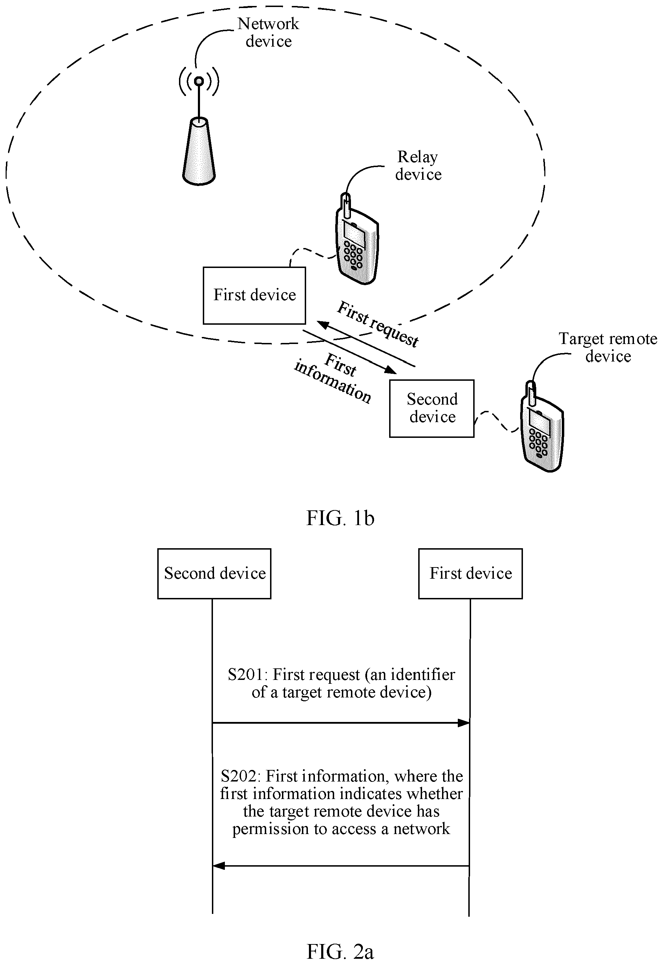

FIG. 1b is a schematic diagram of an architecture of a communication system according to an embodiment of this application. The communication system may include but is not limited to one network device, one first device, and one second device. A quantity and forms of devices shown in FIG. 1b are only examples and do not constitute a limitation on this embodiment of this application. In actual application, two or more network devices, two or more first devices, and two or more second devices may be included. For example, the communication system shown in FIG. 1b includes one network device, one first device, and one second device.

In this embodiment of this application, the second device may be a terminal device or a network element. The terminal device may be a target remote device that expects to access a network; or the terminal device may be a relay device that receives a network access request of the target remote device. The network element may be a session management function (session management function, SMF) network element or another core network element. A specific technology and a specific device form used by the network element are not limited in this embodiment of this application. The SMF may be responsible for session management in a mobile network, for example, session establishment, modification, and release. Specifically, the SMF may be configured to: allocate an internet protocol (Internet Protocol, IP) address to a user, select a user plane function (user plane function, UPF) network element that provides a packet retransmission function, and so on.

When the second device is the target remote device, the first device may be the relay device. In this case, a first request sent by the second device to the first device is used by the target remote device to request to access a network. In other words, the first request sent by the target remote device to the relay device is used by the target remote device to request to access the network.

When the second device is the relay device, the first device may be a network element (for example, an SMF) serving the relay device. In this case, a first request sent by the second device to the first device is used by the target remote device to request to access the network. In other words, the first request sent by the relay device to the network element (for example, an SMF) serving the relay device is used by the target remote device to request to access the network.

When the second device is a network element (for example, an SMF) serving the relay device, the first device may be a rights management device. The rights management device may be configured to record whether a remote device has permission to access a network, or record whether a remote device has permission to access a network via a relay device. The rights management device may be an authentication, authorization, accounting (authentication, authorization, accounting, AAA) server, a 3A server for short. Alternatively, the rights management device may be an application function (application function, AF) network element.

In this embodiment of this application, the remote device is a terminal device outside network coverage, and the relay device is a terminal device located within the network coverage. The terminal device is an entity, for example, a mobile phone, on a user side, configured to receive or transmit a signal. The terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a wearable device, a tablet computer (Pad), a computer with a wireless transceiver function, a virtual reality (virtual reality, VR) terminal device, or an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), and a wireless terminal in transportation safety (transportation safety), a wireless terminal in a smart city (smart city), a wireless terminal in a smart home (smart home), a wireless terminal in the internet of things, or the like. A specific technology and a specific device form used by the terminal device are not limited in this embodiment of this application. It should be noted that, in this embodiment of this application, the relay device may be configured only to assist the remote device in accessing a network. Alternatively, the relay device may further have a function of a common terminal device.

It should be noted that in FIG. 1b, an example in which the first device is the relay device and the second device is the target remote device is used for description. This does not constitute a limitation on this embodiment of this application.

In FIG. 1b, the first device may be configured to receive the first request from the second device, and send first information to the second device. The first request includes the identifier of the target remote device, and when the second device is the terminal device (for example, the target remote device in FIG. 1b), the first request is used by the target remote device to request to access the network; and the first information indicates whether the target remote device has permission to access the network. The target remote device is the remote device that expects to access the network. The identifier of the target remote device is configured to uniquely identify the target remote device. A form of the identifier is not limited in this application.

In FIG. 1b, a circular area is network coverage of the network device. In this embodiment of this application, the circular area may be configured to indicate coverage of a network that the target remote device expects to access.

When the first device receives the first request, it indicates that the target remote device expects to access the network. After receiving the first request, the first device can determine whether the target remote device has permission to access the network, and send the first information to the second device. According to this embodiment of this application, it can be determined whether the target remote device has permission to access the network, and this helps improve network security.

A network (in other words, a network that the remote device (including the target remote device) expects to access) in this embodiment of this application may be a data network, a local area network (local area network, LAN), a core network (for example, a 4G core network or a 5G core network), or another type of network. This is not limited in this embodiment of this application.

In an implementation, if a target remote device has permission to access a network, and the target remote device has a network address (for example, a target network address), the target remote device may send information to the network via the target network address to obtain a network service. That the target remote device sends information to the network through the target network address means: The target remote device sends information to the relay device through the target network address, and the relay device sends the information to the network. In another implementation, if a target remote device has permission to access a network, the first device may further send, to the second device, the target network address allocated to the target remote device. In this manner, when the target remote device has permission to access the network, the network address is allocated to the target remote device, so that a remote device that has no access permission can be prevented from accessing the network, and this helps improve network security.

It should be noted that the network address mentioned in this embodiment of this application may be an internet protocol (Internet Protocol, IP) address or a media access control address (media access control, MAC) address. An example in which the network address is the IP address is used for description in this embodiment of this application, and this does not constitute a limitation on this embodiment of this application. Content related to allocating the IP address also applies to allocating the MAC address.

It should be noted that, in this embodiment of this application, the target remote device may access the network through the relay device. Correspondingly, the authentication request mentioned in this embodiment of this application may be for requesting to determine whether the target remote device has permission to access a network via the relay device. Similarly, the authentication result information mentioned in this embodiment of this application may indicate whether the target remote device has permission to access the network via the relay device. When the second device is the network element, the first request may be for requesting to determine whether the target remote device has permission to access the network, in other words, the first request is for requesting to authenticate the target remote device. In this case, optionally, the first request may be specifically for requesting to determine whether the target remote device has permission to access the network via the relay device. Similarly, response information (namely, the first information) corresponding to the first request may indicate whether the target remote device has permission to access the network via the relay device. In other words, the permission to access the network mentioned in this embodiment of this application may be permission to access the network via the relay device. In addition, in this embodiment of this application, the permission to access the network may be described as network access permission.

It should be further noted that, in this embodiment of this application, the remote device and the relay device may communicate with each other via a proximity service (proximity service, ProSe) communication technology. Near field communication technologies may include but are not limited to device to device (device to device, D2D) communication, wireless fidelity (wireless fidelity, Wi-Fi) communication, and Bluetooth (Bluetooth) communication.

It may be understood that, when the second device is not the target remote device, after receiving the first information, the second device may further send the first information to the target remote device. For example, when a second device is a relay device, and a first device is an SMF network element, after receiving first information, the relay device may further send the first information to a target remote device. When the second device is not the target remote device, after receiving a target IP address, the second device may further send the target IP address to the target remote device.

The network device in this embodiment of this application is an entity, on a network side, that is configured to transmit or receive a signal. For example, a network device may be an evolved NodeB (evolved NodeB, eNB), a transmission reception point (transmission reception point, TRP), a next generation NodeB (next generation NodeB, gNB) in an NR system, a base station in another future mobile communication system, an access node in a wireless fidelity (wireless fidelity, Wi-Fi) system, or the like. A specific technology and a specific device form that are used by the network device are not limited in this embodiment of this application.

It should be noted that the technical solutions in embodiments of this application may be used in various communication systems, for example, a long term evolution (long term evolution, LTE) system, a 5th generation (5th generation, 5G) mobile communication system, or a 5G new radio (new radio, NR) system. Optionally, the method in this embodiment of this application is further applicable to various future evolved communication systems.

It may be understood that the communication system described in embodiments of this application is intended to describe the technical solutions in embodiments of this application more clearly, and does not constitute a limitation on the technical solutions provided in embodiments of this application. A person skilled in the art may know that with evolution of a system architecture and emergence of a new service scenario, the technical solutions provided in embodiments of this application are also applicable to a similar technical problem.

The following describes in detail an authentication method and an apparatus therefor provided in this application with reference to the accompanying drawings.

FIG. 2a is a schematic flowchart of an authentication method according to an embodiment of this application. Step S201 is performed by a second device or a chip in the second device, and step S202 is performed by a first device or a chip in the first device. An example in which the first device and the second device are execution bodies of the authentication method is used for description. As shown in FIG. 2a, the method may include but is not limited to the following steps.

Step S201: A second device sends a first request to a first device, where the first request includes an identifier of a target remote device, and when the second device is a terminal device, the first request is used by the target remote device to request to access a network; or when the second device is a network element, the first request is for requesting to determine whether the target remote device has permission to access a network.

In this embodiment of this application, when the target remote device needs to access a network (or the target remote device needs to access a network via a relay device), the target remote device may send a request, to the relay device, for requesting to access the network. For the target remote device, a purpose of sending the request by the target remote device is to access the network, but not to actively request a network or another device (for example, a relay device) to perform authentication on the target remote device. It should be noted that, in this embodiment of this application, requesting to perform authentication on the target remote device refers to requesting to determine whether the target remote device has permission to access the network.

When the second device is a relay device, and the first device is a network element (for example, an SMF) serving the relay device, a purpose of sending the first request by the second device may be requesting to connect the target remote device to the network. For the first device, to improve network security, when receiving the first request, the first device can determine whether the target remote device has permission to access the network, and the target remote device is allowed to access the target remote device only when it is determined that the target remote device has network access permission.

When the second device is a network element (for example, an SMF) serving the relay device, and the first device may be a rights management device, the second device sends the first request for requesting to determine whether the target remote device has permission to access the network. Therefore, a remote device that has no permission to access the network can be prevented from accessing the network, and this helps improve network security.

Step S202: The first device sends the first information to the second device, where the first information indicates whether the target remote device has permission to access the network.

In this embodiment of this application, after receiving the first request, the first device may trigger an authentication procedure for the target remote device. The authentication procedure for the target remote device determines whether the target remote device has permission to access the network. If the target remote device has permission to access the network, the first information sent by the first device to the second device indicates that the target remote device has permission to access the network. If the target remote device has no permission to access the network, the first information indicates that the target remote device has no permission to access the network. In this manner, an authentication mechanism for the target remote device to access the network is added (in other words, it is determined whether the target remote device has permission to access the network), to prevent a remote device that has no access permission from accessing the network, and this helps improve network security.

In an implementation, the first request may be further for requesting to allocate a network address to the target remote device; and when the target remote device has permission to access the network, the first information may include a target network address allocated to the target remote device. In other words, if the target remote device has permission to access the network, the first device may send, to the second device, the target network address allocated to the target remote device. Optionally, if the target remote device has no permission to access the network, the first device may not send the target network address to the second device. In this manner, when the target remote device has permission to access the network, the network address is allocated to the target remote device, so that a remote device that has no access permission can be prevented from accessing the network, and this helps improve network security.

In an implementation, when the first request may be further for requesting to allocate a network address to the target remote device, the first information may include explicit indication information or implicit indication information, and the indication information indicates whether the target remote device has permission to access a network. For example, if the first information includes the target network address, after receiving the first information, the second device can determine that the target remote device has permission to access the network. In this case, the indication information in the first information is implicit indication information. If the first information does not include the target network address, after receiving the first information, the second device can determine that the target remote device has no permission to access the network. In this case, the indication information in the first information is implicit indication information.

For another example, the indication information in the first information is one field or includes one-bit binary digit (represented as 0 or 1). When a value of the indication information is 1, the indication information indicates that the target remote device has permission to access a network; or when a value of the indication information is 0, the second indication information indicates that the target remote device has no permission to access a network. In this case, the indication information in the first information is explicit indication information. Alternatively, when a value of the indication information is 0, the indication information indicates that the target remote device has permission to access a network; or when a value of the indication information is 1, the second indication information indicates that the target remote device has no permission to access a network. In this case, the indication information in the first information is explicit indication information.

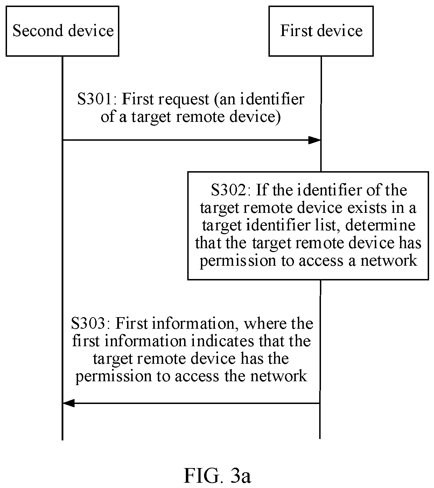

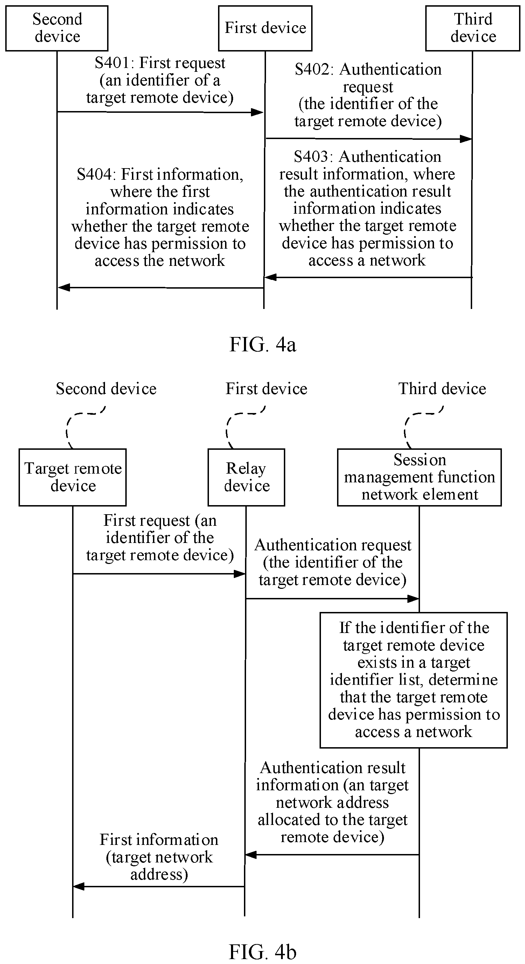

In an implementation, the first device may perform authentication on the target remote device. For a specific authentication procedure of the first device, refer to descriptions in the embodiment in FIG. 3a. In another implementation, the first device may request the third device to perform authentication on the target remote device. For a specific authentication procedure of the first device, refer to descriptions in the embodiment in FIG. 4a.

In this embodiment of this application, the remote device may access a network via a specified relay device, or may access a network via any one of multiple specified relay devices, or may access a network via any device that supports a relay technology. In an implementation, a specific relay device through which the target remote device accesses the network may not be limited in this embodiment of this application. In this case, the authentication procedure for the target remote device can be used for determining whether the target remote device has permission to access a network via a relay technology. In another implementation, the target remote device can access the network only via one or some specified relay devices. In this case, the authentication procedure for the target remote device can be used for determining whether a relay device in a process in which the target remote device requests to access a network is the foregoing specified relay device, and whether the target remote device has permission to access a network via the relay technology. If the relay device in the process in which the target remote device requests to access the network is the foregoing specified relay device, and the target remote device has permission to access the network via the relay technology, it indicates that the authentication on the target remote device succeeds. In other words, it indicates that the target remote device has permission to access the network via the relay device. If the relay device involved in the process in which the target remote device requests to access the network is not the foregoing specified relay device, and/or the target remote device has no permission to access the network via the relay technology, it indicates that the authentication on the target remote device fails. In other words, it indicates that the target remote device has no permission to access the network via the relay device.

In this embodiment of this application, one relay device can assist one or more remote devices in accessing a network. Optionally, one relay device can assist a limited quantity of remote devices in accessing a network. In an implementation, the remote devices that can be assisted by one relay device in accessing the network are some specified remote devices, and the remote devices that can be assisted by different relay devices to access the network may be the same or may be different. In this case, the authentication procedure for the target remote device can be used for determining whether a remote device whose relay device can assist in accessing the network in the process of requesting, by the target remote device, to access the network includes the target remote device. If yes, it indicates that the authentication on the target remote device succeeds, in other words, it indicates that the target remote device has permission to access a network via the relay device. If not, it indicates that the authentication on the target remote device fails, in other words, it indicates that the target remote device has no permission to access a network via the relay device.

In an implementation, the first device may allocate a target network address to the target remote device. For example, when the first device is an SMF or a 3A server, a target network address may be allocated to the target remote device. In another implementation, the first device may request other devices (for example, a fourth device or a fifth device) to allocate a target network address to the target remote device. For example, when the first device is a relay device, the first device may request an SMF or a 3A server to allocate a target network address to the target remote device.

In an implementation, a device (the first device, the fourth device, or the fifth device) being responsible for allocating a network address may pre-allocate a network address to each remote device that has network access permission. In other words, multiple network addresses can be assigned at a time. In this case, when the network address is allocated, all remote devices or some remote devices that have network access permission may have not initiated a network access request. In other words, when the remote device has no requirement for accessing a network, a network address may also be allocated to the remote device. It should be noted that, after initiating the network access request, the remote device can successfully access the network only when the authentication on the remote device succeeds and the remote device has the network address, to obtain the network service. It should be further noted that whether the remote device has the network address and whether the authentication on the remote device succeeds may be decoupled (or mutually independent). In another implementation, a device (the first device, the fourth device, or the fifth device) being responsible for allocating a network address may allocate a network address to the remote device that has network access permission and has initiated a network access request. In other words, when the remote device has a requirement for accessing a network, a network address may also be allocated to the remote device. It should be noted that, when a second device is the target remote device, a first request sent by the second device is the foregoing network access request. The network access request mentioned in this embodiment of this application is used by a sender of the network access request for requesting to access a network.

In an implementation, a process in which the first device allocates a network address is as follows: The first device allocates a target network address to the target remote device, and sends the target network address to the second device. Correspondingly, after receiving the target network address, the second device may send the target network address to the target remote device. For example, when the first device is an SMF, and the second device is a relay device, after receiving the target network address, the relay device may send the target network address to the target remote device. For another example, when the first device is a 3A server, and the second device is an SMF, after receiving the target network address, the SMF may send the target network address to the relay device. Correspondingly, the relay device may send the target network address from the SMF to the target remote device.

In another implementation, a process in which the first device allocates a network address is as follows: The first device allocates network addresses (including a target network address) to multiple remote devices (including the target remote device) respectively, and sends the allocated network addresses to the second device. Correspondingly, when a remote device in the multiple remote devices needs to access a network (for example, when the remote device initiates a network access request), the second device may send, to the remote device, the received network address corresponding to the remote device. For example, the first device allocates a network address 1 to a remote device 1, allocates a network address 2 to a remote device 2, allocates a network address 3 to a remote device 3, and sends the allocated network addresses (namely, the network address 1, the network address 2, and the network address 3) to the second device. Correspondingly, the second device may send the network address 1 to the remote device 1 when the remote device 1 initiates a network access request. Similarly, the second device may send the network address 2 to the remote device 2 when the remote device 2 initiates a network access request. The second device may send the network address 3 to the remote device 3 when the remote device 3 initiates a network access request. It should be noted that, in this embodiment of this application, two devices may directly communicate with each other, or may indirectly communicate with each other via another device or a network element. A manner of communication between the two devices is not limited in this embodiment of this application. For example, when the first device is an SMF, and the second device is a relay device, after receiving the network address, the relay device may directly send the network address to a corresponding remote device. For another example, when the first device is a 3A server, and the second device is an SMF, after receiving the network address, the SMF may send the network address to a corresponding remote device via a relay device.

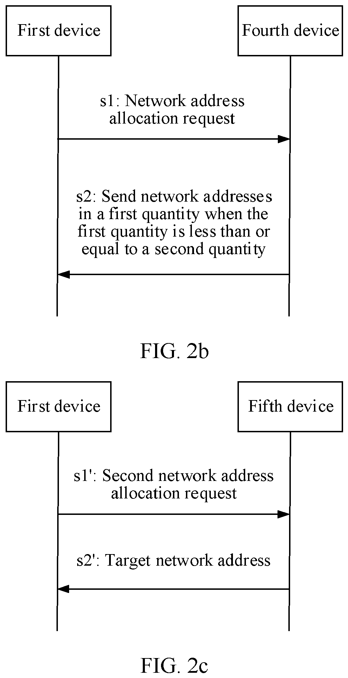

In an implementation, a process in which the first device requests the fourth device to allocate a network address may be shown in FIG. 2b, and includes but is not limited to step s1 and step s2.

Step s1: A first device sends a network address allocation request (which may also be referred to as a first network address allocation request) to a fourth device, where the network address allocation request is for requesting to obtain network addresses in a first quantity. The first quantity may be one or more.

Step s2: When the first quantity is less than or equal to a second quantity, the fourth device sends the network addresses in the first quantity to the first device; and the second quantity is a quantity of remote devices that have permission to access a network. The network addresses in the first quantity include the foregoing target network address.

The second quantity is a quantity of remote devices that have permission to access the network, in other words, a maximum of the second quantity of remote devices can access the network. Alternatively, the second quantity is a quantity of remote devices that have permission to access the network via the relay device, in other words, a maximum of the second quantity of remote devices can access the network via the relay device. It should be noted that, in this case, a specific relay device through which each remote device accesses the network may not be limited. When the first quantity is less than or equal to the second quantity, the fourth device sends the network addresses in the first quantity to the first device. In one aspect, that network addresses whose quantity is greater than the second quantity are allocated for relay access can be avoided, in other words, a case in which the quantity of allocated network addresses is greater than the quantity of needed network addresses can be avoided. This helps avoid wasting network addresses. In another aspect, when the fourth device is a device being responsible for allocating a network address, and the first quantity is multiple, the fourth device allocates multiple network addresses at a time, so that the following case can be avoided: When different remote devices initiate a network access request, the first device needs to request the fourth device to allocate a network address to the remote device again. Therefore, allocating multiple network addresses at a time helps reduce unnecessary interaction between the first device and the fourth device, to help save resources.

In an implementation, the first quantity may be configured by a network (for example, delivered in system message or dedicated signaling), or may be agreed on in a protocol, or may be set by the first device by default, or may be set and changed by a user. This is not limited in this embodiment of this application. In an implementation, the sixth device may notify the fourth device of the second quantity in advance, or the fourth device may request the sixth device to obtain the second quantity. The sixth device may be a unified data management (unified data management, UDM) network element or the foregoing rights management network element. In another implementation, the second quantity may be determined based on configuration information corresponding to the foregoing network, or may be configured by the network (for example, delivered in a system message or dedicated signaling), or may be agreed on in a protocol, or may be set by the fourth device by default, or may be set and changed by a user. This is not limited in this embodiment of this application. The configuration information corresponding to the network may indicate a quantity (namely, the second quantity) of remote devices that can access the network.

In another implementation, the network address allocation request may include indication information that indicates the target relay device. The target relay device may be the relay device involved in a process in which the target remote device requests to access the network. In this case, the second quantity may be specifically a quantity of remote devices that have permission to access the network through the target relay device. In an implementation, a quantity of remote devices that can be assisted by different relay devices in access the network may be the same or different. In other words, for example, the relay device includes a relay device 1 and a relay device 2, and a quantity of remote devices that have permission to access the network through the relay device 1 may be the same as or may be different from a quantity of remote devices that have permission to access the network through the relay device 2.

In an implementation, when the fourth device is the SMF, the network address allocation request may be included in a session establishment request, and the session establishment request may be for requesting to create a session about the first device. The session about the first device may be for transmitting information sent by the first device. The session mentioned in this embodiment of this application may be a protocol data unit (protocol data unit, PDU) session.

It should be noted that a sequence in which the first device receives the first request and performs step s1 is not limited in this embodiment of this application. For example, the first device may perform step s1 after receiving the first request. Alternatively, step s1 may be performed before the first request is received. Alternatively, step s1 and receiving the network addresses in the first quantity may be performed before the first request is received. Alternatively, step s1 and the first request may be simultaneously performed.

In an implementation, a process in which the first device requests a fifth device to allocate a network address may be shown in FIG. 2c, and includes but is not limited to step s1' and step s2'.

Step s1': The first device sends a second network address allocation request to the fifth device, where the second network address allocation request is for requesting to allocate a network address to the foregoing target remote device.

Step s2': The fifth device sends, to the first device, a target network address (for example, a target IP address) allocated to the target remote device.

In an implementation, the first device may send the second network address allocation request to the fifth device when the target remote device has permission to access a network. In this manner, the following case can be avoided: When the target remote device has no permission to access the network, the fifth device is requested to allocate the target network address. Even if the fifth device allocates the target network address, the first device does not send the target network address to the target remote device. Therefore, when the target remote device has permission to access the network, sending the second network address allocation request to the fifth device helps avoid an unnecessary communication process between the first device and the fifth device, and helps avoid a waste of resources.

In an implementation, when the fifth device is the SMF, the second network address allocation request may be included in a session establishment request, and the session establishment request may be for requesting to create a session about the first device. Alternatively, the second network address allocation request may be included in a session update request. In this case, the session about the first device has been created in the network. Therefore, after receiving the second network address allocation request, the SMF does not need to create a new session about the first device. In this embodiment of this application, the fourth device and the fifth device may be a same device or different devices.

In an implementation, if the first device is a relay device, and the second device is a target remote device, when the first device receives a first data packet from the second device, and a session about the first device is successfully established, the first device may process the first data packet to obtain a second data packet, and transmits the second data packet through the session. A source IP address of the first data packet is the IP address (namely, the target IP address) allocated to the target remote device, and a source IP address of the second data packet is the IP address of the first device.

In an implementation, a specific implementation in which the first device may process the first data packet may be as follows: The first device changes the source IP address of the first data packet from the target IP address to the IP address of the first device. Alternatively, the first device performs encapsulation processing on the first data packet, where a source IP address added to the first data packet during the encapsulation processing is an IP address of the first device. In this case, the encapsulated first data packet (namely, the second data packet) carries two source IP addresses, where the source IP address encapsulated in the outer layer is the IP address of the first device, and the source IP address encapsulated in the inner layer is the target IP address. In this way, when a feedback data packet for the second data packet is received (carrying two destination IP addresses, where a destination IP address encapsulated in the outer layer is the IP address of the first device, and a destination IP address encapsulated in the inner layer is the target IP address), the feedback data packet may be conveniently sent to the remote device (namely, the target remote device) whose IP address is the target IP address based on the target IP address encapsulated in the inner layer. In this embodiment of this application, that the first device transmits the second data packet through the session means: The first device transmits the second data packet to a user plane function (user plane function, UPF) network element through the session.

It should be noted that, in this embodiment of this application, the IP address (including the target IP address) allocated to the remote device may be a public IP address or a private IP address. The IP address (including the destination IP address) allocated to the remote device can be an IPv4 address or an IPv6 address. This is not limited in this embodiment of this application.

In an implementation, after allocating the network address to the remote device, the device (for example, the SMF or the 3A server) responsible for allocating the network address may further send, to the UPF, the network address allocated to the remote device. After receiving the network address, the UPF may configure the network address as packet sending and receiving information of an N6 interface. In this way, the N6 interface can successfully identify information that needs to be sent to the remote device, and further send, to the remote device, the information that needs to be sent to the remote device. An N6 interface protocol in a 5G protocol is corresponding to an interface protocol between the UPF and a data network (data network, DN). In an implementation, the UPF may further store a correspondence between the network address of the remote device and the network address of the relay device (corresponding to the remote device). The relay device corresponding to the remote device may mean that the remote device accesses the network through the relay device. The UPF stores the correspondence, so that information that needs to be sent to the remote device is routed to the remote device based on the correspondence, and then sent to the remote device.

According to this embodiment of this application, an authentication mechanism for the target remote device to access the network is added to determine whether the target remote device has permission to access the network, to prevent a remote device that has no access permission from accessing the network, and this helps improve network security.

FIG. 3a is a schematic flowchart of another authentication method according to an embodiment of this application. The method describes in detail how a first device authenticates a target remote device. Step S301 is performed by a second device or a chip in the second device, and steps S302 and S303 are performed by the first device or a chip in the first device. An example in which the first device and the second device are used as execution bodies of the authentication method is used for description. As shown in FIG. 3a, the method may include but is not limited to the following steps.

Step S301: The second device sends a first request to the first device, where the first request includes an identifier of the target remote device, and when the second device is a terminal device, the first request is used by the target remote device to request to access a network; or when the second device is a network element, the first request is configured to request to determine whether the target remote device has permission to access a network.

It should be noted that, for an execution process of step S301, refer to the specific descriptions of step S201 in FIG. 2a. Details are not described herein again.

Step S302: If the identifier of the target remote device exists in a target identifier list, the first device determines that the target remote device has permission to access the network. The target identifier list includes one or more target identifiers, and the target identifier indicates that a remote device that has permission to access the network.

In this embodiment of this application, an authentication procedure for the target remote device may be locally completed by the first device. The authentication procedure is specifically as follows: After receiving the first request, the first device can determine whether the target remote device has permission to access the network. In an implementation, the first device may determine, in but not limited to the following manners, whether the target remote device has permission to access the network: (1) Whether the target remote device has permission to access the network is determined depending on whether a current location of the target remote device is within a location area in which network access is allowed. If yes, it may be determined that the target remote device has permission to access the network. If not, it may be determined that the target remote device has no permission to access the network. The location area in which the network access is allowed may be a first tracking area, and the first tracking area may be determined through a tracking area code (tracking area code, TAC). When the target remote device is in the first tracking area, the target remote device may be allowed to access the network. When the target remote device is not in the first tracking area, the target remote device may be allowed to access the network. (2) Whether the target remote device has permission to access the network is determined based on a capability of the target remote device. The capability of the target remote device may include: whether the target remote device has an Ethernet communication capability, whether the target remote device has a switch capability, and the like. If the target remote device has the capability, it may be determined that the target remote device has permission to access the network. If the target remote device does not have the capability, it may be determined that the target remote device has no permission to access the network. (3) Whether the target remote device has permission to access the network is determined depending on whether a subscription of the network for the target remote device is valid. Whether the subscription of the network for the target remote device is valid may represent whether the target remote device is allowed to access the network. If the subscription of the network for the target remote device is valid, it may be determined that the target remote device has permission to access the network. If the subscription of the network for the target remote device is invalid, it may be determined that the target remote device has no permission to access the network. (4) Whether the target remote device has permission to access the network is determined depending on whether the identifier of the target remote device exists in the target identifier list. If yes, it indicates that the target remote device has permission to access the network. If not, it indicates that the target remote device has no permission to access the network.

The target identifier list may be locally stored in the first device. In an implementation, the target identifier list in the first device may be preconfigured for the first device by the foregoing rights management device (for example, a 3A server or an AF). Alternatively, the target identifier list may be sent by the rights management device to the first device in advance.

In an implementation, each network may correspond to one identifier list. For a network, an identifier list corresponding to the network may indicate each remote device that has permission to access the network. The relay device stores an identifier list 1 and an identifier list 2. The identifier list 1 corresponds to the network 1, and indicates each remote device that has permission to access the network 1. The identifier list 2 corresponds to the network 2, and indicates each remote device that has permission to access the network 2. If the remote device 1 requests to access the network 1, and the remote device 2 requests to access the network 2, an authentication procedure of the relay device for the remote device 1 is as follows: The relay device determines whether the identifier of the remote device 1 exists in the identifier list 1. If yes, it indicates that the remote device 1 has permission to access the network 1. If not, it indicates that the remote device 1 has no permission to access the network 1. An authentication procedure of the relay device for the remote device 2 is as follows: The relay device 1 determines whether the identifier of the remote device 2 exists in the identifier list 2. If yes, it indicates that the remote device 2 has permission to access the network 2. If not, it indicates that the remote device 2 has no permission to access the network 2. In an implementation, for a network, an identifier list corresponding to the network may indicate each remote device that has permission to access the network through a relay device. In an implementation, different remote devices may request to access different networks through a same relay device. For example, the remote device 1 may request to access the network 1 through the relay device 1, and the remote device 2 may request to access the network 2 through the relay device 1 or the relay device 2.

In this embodiment of this application, the foregoing network (namely, a network that the remote device (including the target remote device) expects to access) may be a data network, a local area network (local area network, LAN), a core network (for example, a 4G core network or a 5G core network), or another type of network. This is not limited in this embodiment of this application. It should be noted that the relay device may broadcast, on a sidelink (sidelink, SL) interface, an identifier of a network that can be accessed by the relay device, so that the remote device may initiate, based on a network that the remote device expects to access, a network access request to the relay device that can access the network. The sidelink may also be referred to as a sidelink or a direct link.

In an implementation, the first request may further include a network identifier. In this case, the first information may specifically indicate whether the target remote device has permission to access the network indicated by the network identifier. When the second device is a terminal device (for example, the target remote device or a terminal device), the first request is specifically used by the target remote device to request to access the network indicated by the network identifier; or when the second device is a network element, the first request is specifically for requesting to determine whether the target remote device has permission to access the network indicated by the network identifier. The network identifier is used to uniquely identify a network. It may be understood that the network identifier may be an identifier of a data network, an identifier of a local area network (local area network, LAN), an identifier of a core network (for example, a 4G core network or a 5G core network), or an identifier of another type of network. This is not limited in this embodiment of this application.

If the first device determines, depending on whether the identifier of the target remote device exists in the target identifier list, whether the target remote device has permission to access the network, the target identifier list may be associated with the network identifier. In this case, the target identifier may specifically indicate a remote device that has permission to access the network indicated by the network identifier.

It can be learned with reference to the foregoing content that a network identifier may be associated with an identifier list. For a network, the identifier list associated with the network identifier may indicate each remote device that has permission to access the network indicated by the network identifier. Therefore, after the first device receives the first request, the authentication procedure for the target remote device is as follows: A target identifier list associated with the network identifier in the first request is obtained, to determine whether the identifier of the target remote device exists in the target identifier list. If yes, it indicates that the target remote device has permission to access the network (indicated by the network identifier). If not, it indicates that the target remote device has no permission to access the network.

In this manner, a device that has no permission to access the network can be prevented from accessing the network. When the network identifier is the identifier of the LAN, a member that skips belonging to the LAN can be prevented from joining the LAN session.

Step S303: The first device sends first information to the second device, where the first information indicates that the target remote device has permission to access a network.

Specifically, if the target remote device has permission to access the network (for example, a data network or a LAN), the first information that may be sent by the first device to the second device indicates that the target remote device has permission to access the network. If the target remote device has no permission to access the network (for example, the data network or the LAN), the first information sent by the first device to the second device indicates that the target remote device has no permission to access the network. In an implementation, if the target remote device has permission to access the network (for example, the data network or the LAN), the first device may send, to the second device, the target network address allocated to the target remote device. If the target remote device has no permission to access the network (for example, the data network or the LAN), the first device may not send the target network address to the second device. It should be noted that, for content about how the first device obtains the network address (including the target network address) allocated to the remote device, refer to related descriptions in the embodiment in FIG. 2a. Details are not described herein again. It should be further noted that, for an execution process of step S303, refer to the specific descriptions of step S202 in FIG. 2a. Details are not described herein again.

In this embodiment of this application, the device that allocates the network address to the remote device may be the first device, or the first device may request another device (for example, a fourth device or a fifth device) to allocate the network address to the remote device.

In an implementation, the network address of the remote device may be pre-allocated and stored in the first device. After authentication on the remote device (for example, the target remote device) succeeds, the first device may send, to the second device, the network address (namely, the target network address) allocated to the target remote device. It should be noted that a success of authentication on a device described in this embodiment of this application refers to determining that the device has permission to access a network. Similarly, a failure of authentication on a device described in this embodiment of this application refers to determining that the device has no permission to access a network.

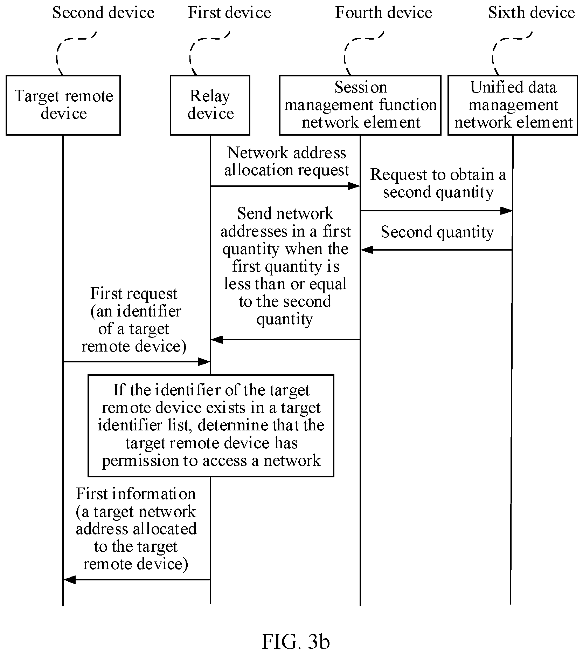

For example, the first device is a relay device, the second device is a target remote device, the fourth device is an SMF, the sixth device is a UDM, and a first quantity is multiple. FIG. 3b may be a schematic diagram of a scenario in which a network address is allocated to a remote device (including a target remote device) in advance. The target remote device sends a first request to the relay device, and this indicates that the target remote device expects to access a network. In this case, the first request is used by the target remote device to request to access the network, and is further for requesting to allocate the network address to the target remote device. It can be learned from FIG. 3b that, before receiving the first request, the relay device may send a network address allocation request to the SMF, to request the SMF in advance to allocate network addresses to multiple (namely, the first quantity of) remote devices (including the target remote device) respectively. After receiving the network address allocation request, the SMF may obtain a second quantity from the UDM, allocate a network address to each of the multiple remote devices when the first quantity is less than or equal to the second quantity, and send, to the relay device, the network address allocated to each remote device. In this way, after the relay device receives the first request, and the authentication on the target remote device succeeds (for example, the identifier of the target remote device exists in the target identifier list), the target network address allocated by the SMF to the target remote device may be obtained from a local memory, and the target network address carried in the first information (where the first information indicates that the target remote device has permission to access the network) is sent to the target remote device.

In another implementation, the first device may trigger a process of allocating a network address to the target remote device after determining that authentication on the target remote device succeeds. For example, when the device that allocates the network address to the remote device is the first device, the first device may allocate the network address to the target remote device after determining that authentication on the target remote device succeeds. For another example, when the first device requests another device (for example, a fourth device or a fifth device) to allocate a network address to the remote device, the first device may request, after determining that authentication on the target remote device succeeds, another device (for example, the fourth device or the fifth device) to allocate the network address to the remote device. In this manner, a case in which a process of allocating the network address to the remote device is triggered, but an authentication result of the remote device is an authentication failure can be avoided, thereby helping avoid a waste of resources.

According to this embodiment of this application, an authentication mechanism for the target remote device to access the network is added to determine whether the target remote device has permission to access the network, to prevent a remote device that has no access permission from accessing the network, and this helps improve network security.

FIG. 4a is a schematic flowchart of still another authentication method according to an embodiment of this application. The method describes in detail how a third device authenticates a target remote device. Step S401 is performed by a second device or a chip in the second device, and steps S402 and S404 are performed by a first device or a chip in the first device, and step S403 is performed by the third device or a chip in the third device. The following uses an example in which the authentication method is performed by the first device, the second device, and the third device. As shown in FIG. 4a, the method may include but is not limited to the following steps.

Step S401: The second device sends a first request to the first device, where the first request includes an identifier of the target remote device, and when the second device is a terminal device, the first request is used by the target remote device to request to access a network; or when the second device is a network element, the first request is for requesting to determine whether the target remote device has permission to access a network.

It should be noted that, for an execution process of step S401, refer to the specific descriptions of step S201 in FIG. 2a. Details are not described herein again.

Step S402: The first device sends an authentication request to the third device, where the authentication request includes an identifier of a target remote device, and the authentication request is for requesting to determine whether the target remote device has permission to access a network.

In this embodiment of this application, the first device may request the third device to perform authentication on the target remote device. A process (or method) of authenticating the target remote device by the third device is the same as a process (or method) of authenticating the target remote device by the first device in the embodiment in FIG. 3a. A difference lies in that the first device in the embodiment in FIG. 3a is an authentication subject. However, in the embodiment in FIG. 4a, the third device is an authentication subject. For an execution process of step S402, refer to related content in which the first device is used as an authentication subject in the embodiment in FIG. 3a. Details are not described herein again.

Step S403: The third device sends authentication result information to the first device, where the authentication result information indicates whether the target remote device has permission to access a network.

Specifically, after receiving the authentication request, the third device may determine whether the target remote device has permission to access the network. The third device may determine, in but not limited to the following manners, whether the target remote device has permission to access the network: (1) Whether the target remote device has permission to access the network is determined depending on whether a current location of the target remote device is within a location area in which network access is allowed. (2) Whether the target remote device has permission to access the network is determined based on a capability of the target remote device. (3) Whether the target remote device has permission to access the network is determined depending on whether a subscription of the network for the target remote device is valid. (4) Whether the target remote device has permission to access the network is determined depending on whether the identifier of the target remote device exists in the target identifier list. For a detailed process, refer to the specific descriptions in step S302 in the embodiment in FIG. 3a. Details are not described herein again.

It should be noted that when the third device is used as the authentication subject, to notify the first device whether authentication on the target remote device succeeds, the third device may send the authentication result information to the first device after completing the authentication on the target remote device, to indicate whether the authentication on the target remote device succeeds (in other words, whether the target remote device has permission to access the network). Specifically, if the authentication on the target remote device succeeds, the authentication result information sent to the first device indicates that the target remote device has permission to access the network. If the authentication on the target remote device fails, the authentication result information sent to the first device indicates that the target remote device has no permission to access the network.

In this embodiment of this application, the network that the remote device expects to access may be a data network, a local area network, or another type of network. In an implementation, the first request and the authentication request may further include a network identifier, and the authentication request is specifically for requesting to determine whether the target remote device has permission to access the network indicated by the network identifier; and the first information and the authentication result information each specifically indicate whether the target remote device has permission to access the network indicated by the network identifier. When the second device is a terminal device (for example, the target remote device or a relay device), the first request is specifically used by the target remote device to request to access the network indicated by the network identifier; or when the second device is a network element (for example, an SMF network element), the first request is specifically for requesting to determine whether the target remote device has permission to access the network indicated by the network identifier.

If the third device determines, depending on whether the identifier of the target remote device exists in the target identifier list, whether the target remote device has permission to access the network, the target identifier list is associated with the network identifier. In this case, the target identifier may specifically indicate a remote device that has permission to access the network indicated by the network identifier.

Step S404: The first device sends first information to the second device, where the first information indicates whether the target remote device has permission to access the network.

Specifically, after receiving the authentication result information, the first device may send the first information to the second device. In this case, the authentication result information is consistent with content indicated by the first information, in other words, both the authentication result information and the first information indicate that the target remote device has permission to access the network, or both the authentication result information and the first information indicate that the target remote device has no permission to access the network.

In an implementation, if the authentication result information indicates that the target remote device has permission to access the network, the first device may further send, to the second device, the target network address allocated to the target remote device, so that the second device sends the target network address to the target remote device. The target network address and the first information may be sent together (for example, the target network address is carried in the first information), or may be sent separately. This is not limited in this embodiment of this application. If the authentication result information indicates that the target remote device has no permission to access the network, the first device may not send the target network address to the second device, or may not trigger a procedure of allocating the network address to the target remote device.

In an implementation, a process of allocating a network address to the target remote device after determining that authentication on the target remote device succeeds. In an implementation, the first device may trigger the procedure of allocating the network address to the target remote device. Alternatively, the procedure of allocating the network address to the target remote device may be triggered by a device (for example, the third device) responsible for the authentication. In an implementation, the device responsible for the authentication and the device responsible for allocating the network address to the target remote device may be a same device. Alternatively, the devices may be different devices. This is not limited in this embodiment of this application.

In an implementation, the authentication request sent by the first device to the third device may be further for requesting to allocate a network address to the target remote device. Correspondingly, the foregoing authentication result information may include the target network address allocated to the target remote device. In other words, in addition to authenticating the target remote device, the third device may be further configured to allocate the network address to the target remote device. Step S201:

FIG. 4b is a schematic diagram of a scenario in which both a device responsible for authentication and a device responsible for allocating a network address to a target remote device are a third device. In FIG. 4b, an example in which a first device is a relay device, a second device is a target remote device, and the third device is an SMF is used. The target remote device sends a first request to the relay device, and this indicates that the target remote device expects to access a network. In this case, the first request is used by the target remote device to request to access the network, and is further for requesting to allocate a network address to the target remote device. It can be learned from FIG. 4b that, after receiving the first request, the relay device sends an authentication request to an SMF, to request the SMF to authenticate the target remote device, and allocate the network address to the target remote device when the authentication succeeds. Correspondingly, after the SMF successfully authenticates the target remote device (for example, the identifier of the target remote device exists in the target identifier list), a target network address may be allocated to the target remote device, and the target network address carried in authentication result information (where the authentication result information indicates that the target remote device has permission to access a network) is sent to the first device. Then, the first device may send the target network address carried in the first information (where the first information indicates that the target remote device has permission to access a network) to the target remote device. In this process, the SMF is configured to authenticate the target remote device, and is further configured to allocate the network address to the target remote device.

In another implementation, when the authentication request sent by the first device to the third device is further for requesting to allocate a network address to the target remote device, authentication result information sent by the third device to the first device (where the authentication result information indicates that the target remote device has permission to access a network) may be further indicate the first device to allocate a network address to the target remote device. Correspondingly, after receiving the authentication result information, the first device may allocate a network address to the remote device.

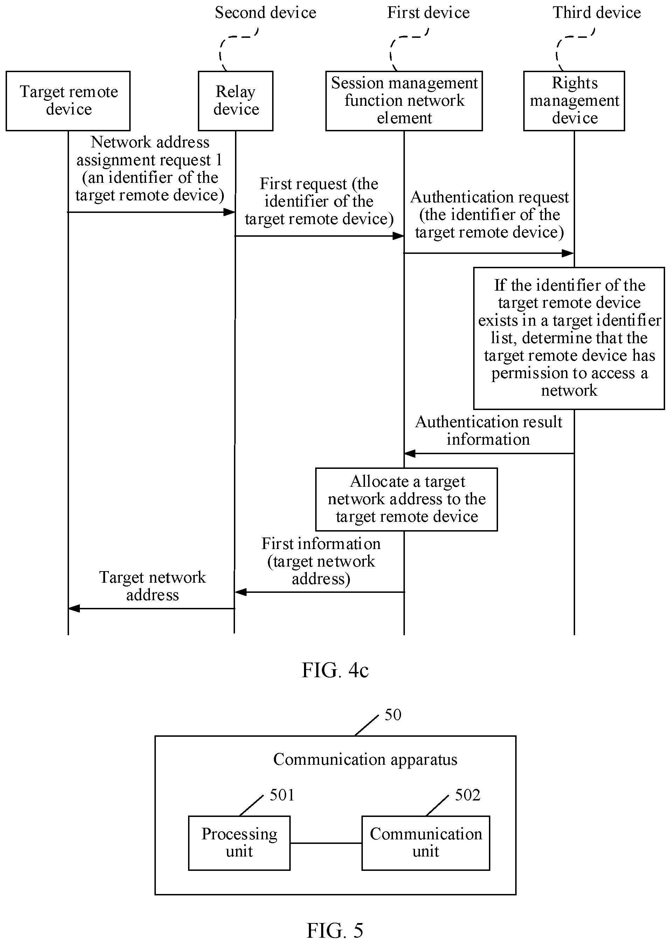

FIG. 4c is a schematic diagram of a scenario in which a device responsible for authentication and a device responsible for allocating a network address to a target remote device are different devices. In FIG. 4c, an example in which the first device is an SMF, the second device is a relay device, and the third device is a rights management device is used. The target remote device sends a network address allocation request 1 to the relay device, where the network address allocation request 1 includes an identifier of the target remote device, and the network address allocation request 1 is for requesting to allocate a network address to the target remote device. In other words, that the target remote device sends a network address allocation request 1 to the relay device indicates that the target remote device expects to access a network. It can be learned from FIG. 4c that after receiving the network address allocation request 1, the relay device sends the first request (including the identifier of the target remote device) to the SMF, to indicate that the target remote terminal requests to access the network and requests to allocate the network address to the target remote device. In this case, the SMF may send an authentication request to the rights management device, to request the rights management device to perform authentication on the target remote device. After the authentication succeeds, the authentication result information sent by the rights management device to the SMF may indicate that the authentication on the target remote device succeeds and indicate that the SMF is the network address allocated by the target remote device. It may be understood that, after receiving the authentication result information, the SMF may allocate a target network address to the target remote device, the target network address carried in the first information (where the first information indicates that the target remote device has permission to access a network) is fed back to the relay device, and then the relay device feeds back the target network address to the target remote device.

In an implementation, the authentication request in FIG. 4c may be further for requesting the rights management device to allocate a network address to the remote device after the authentication on the target remote device succeeds. After authenticating the target remote device successfully, the rights management device may continue to allocate a network address to the target remote device, or may authorize or indicate the SMF to allocate a network address to the target remote device. In this process, a device that authenticates the target remote device is a rights management device, and a device that allocates a network address to the target remote device is an SMF.

It should be noted that for a remaining part of an execution process of step S404, refer to the specific descriptions of step S202 in FIG. 2a. Details are not described herein again.

According to this embodiment of this application, an authentication mechanism for the target remote device to access the network is added to determine whether the target remote device has permission to access the network, to prevent a remote device that has no access permission from accessing the network, and this helps improve network security.

In the foregoing embodiments provided in this application, the methods provided in embodiments of this application are separately described from perspectives of the first device and the second device. To implement functions in the methods provided in embodiments of this application, the first device and the second device may include a hardware structure or a software module, and implement the foregoing functions in a form of the hardware structure, the software module, or the hardware structure plus the software module. A function in the foregoing functions may be performed through the hardware structure, the software module, or the hardware structure plus the software module.

FIG. 5 is a schematic diagram of a structure of a communication apparatus 50 according to an embodiment of this application. The communication apparatus 50 shown in FIG. 5 may include a processing unit 501 and a communication unit 502. The communication unit 502 may include a sending unit and/or a receiving unit. The sending unit is configured to implement a sending function, the receiving unit is configured to implement a receiving function, and the communication unit 502 may implement the sending function and/or the receiving function. The communication unit may also be described as a transceiver unit.

The communication apparatus 50 may be a first device, or may be an apparatus in the first device, or may be an apparatus that can be used in coordination with the first device. Alternatively, the communication apparatus 50 may be a second device, or may be an apparatus in the second device, or may be an apparatus that can be used in coordination with the second device.

When the communication apparatus 50 is the first device, the processing unit 501 is configured to invoke the communication unit 502 to receive a first request from the second device, where the first request includes an identifier of a target remote device, and when the second device is a terminal device, the first request is used by the target remote device to request to access a network; or when the second device is a network element, the first request is for requesting to determine whether the target remote device has permission to access a network. The processing unit 501 is further configured to invoke the communication unit 502 to send first information to the second device, where the first information indicates whether the target remote device has permission to access the network.

In an implementation, the processing unit 501 may be further configured to determine whether the target remote device has permission to access the network.

In an implementation, the processing unit 501 may be further configured to: if the identifier of the target remote device exists in the target identifier list, determine that the target remote device has permission to access the network, where the target identifier list includes one or more target identifiers, and the target identifier indicates a remote device that has permission to access the network.

In an implementation, the first request further includes a network identifier; the first information specifically indicates whether the target remote device has permission to access a network indicated by the network identifier; and when the second device is a terminal device, the first request is specifically used by the target remote device to request to access the network indicated by the network identifier; or when the second device is a network element, the first request is specifically for requesting to determine whether the target remote device has permission to access the network indicated by the network identifier.

In an implementation, the processing unit 501 is further configured to invoke the communication unit 502 to send an authentication request to the third device, where the authentication request includes an identifier of the target remote device, and the authentication request is for requesting to determine whether the target remote device has permission to access the network. The processing unit 501 is further configured to invoke the communication unit 502 to receive authentication result information from the third device, where the authentication result information indicates whether the target remote device has permission to access the network.

In an implementation, when the identifier of the target remote device exists in the target identifier list, the authentication result information indicates that the target remote device has permission to access the network, and the target identifier list includes one or more target identifiers. The target identifier indicates a remote device that has permission to access a network.

In an implementation, the first request and the authentication request each further include a network identifier, and the authentication request is specifically for requesting to determine whether the target remote device has permission to access the network indicated by the network identifier; the first information and the authentication result information each specifically indicate whether the target remote device has permission to access a network indicated by the network identifier; and when the second device is a terminal device, the first request is specifically used by the target remote device to request to access the network indicated by the network identifier; or when the second device is a network element, the first request is specifically for requesting to determine whether the target remote device has permission to access the network indicated by the network identifier.

In an implementation, the first request may be further for requesting to allocate a network address to the target remote device; and when the target remote device has permission to access a network, the first information may include a target network address allocated to the target remote device.

In an implementation, the processing unit 501 is further configured to invoke the communication unit 502 to send a network address allocation request to the fourth device, where the network address allocation request is for requesting to obtain network addresses in a first quantity. The processing unit 501 is further configured to invoke the communication unit 502 to receive network addresses in a first quantity from the fourth device. The network addresses in the first quantity are sent when the first quantity is less than or equal to a second quantity; the second quantity is a quantity of remote devices that have permission to access the network; and the network addresses in the first quantity include the target network address.

When the communication apparatus 50 is a second device: a processing unit 501, configured to invoke the communication unit 502 to send a first request to a first device, where the first request includes an identifier of a target remote device, and when the communication apparatus 50 is an apparatus in a terminal device, the first request is used by the target remote device to request to access a network; or when the communication apparatus 50 is an apparatus in a network element, the first request is for requesting to determine whether the target remote device has permission to access a network; and the processing unit 501 is further configured to invoke the communication unit 502 to receive first information from the first device, where the first information indicates whether the target remote device has permission to access a network.

In an implementation, the first request further includes a network identifier; and the first information specifically indicates whether the target remote device has permission to access the network indicated by the network identifier. When the communication apparatus 50 is an apparatus in a terminal device, the first request is specifically used by the target remote device to request to access the network indicated by the network identifier; or when the communication apparatus 50 is an apparatus in a network element, the first request is specifically for requesting to determine whether the target remote device has permission to access the network indicated by the network identifier

In an implementation, the first request may be further for requesting to allocate a network address to the target remote device; and when the target remote device has permission to access a network, the first information includes a target network address allocated to the target remote device.

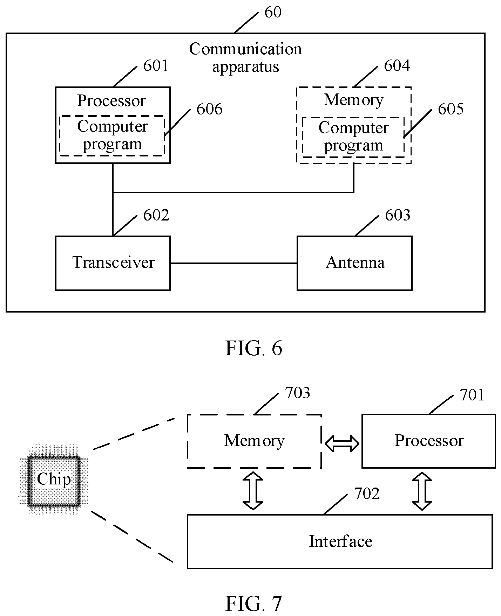

FIG. 6 is a schematic diagram of a structure of another communication apparatus 60 according to an embodiment of this application. The communication apparatus 60 may be a first device or a second device, or may be a chip, a chip system, or a processor that supports the first device in implementing the foregoing methods, or may be a chip, a chip system, or a processor 701 that supports the second device in implementing the foregoing methods. The apparatus may be configured to implement the methods described in the foregoing method embodiments. For details, refer to the descriptions in the foregoing method embodiments.

The communication apparatus 60 may include one or more processors 601. The processor 601 may be a general-purpose processor, a dedicated processor, or the like. For example, the processor 601 may be a baseband processor or a central processing unit. The baseband processor may be configured to process a communication protocol and communication data. The central processing unit may be configured to control a communication apparatus (for example, a remote device, a remote device chip, a relay device, a relay device chip, an SMF, an SMF chip, a DU, or a CU), execute a computer program, and process data of the computer program.

The communication apparatus 60 may further include a transceiver 602 and an antenna 603. The transceiver 602 may be referred to as a transceiver unit, a transceiver, a transceiver circuit, or the like, and is configured to implement a transceiver function. The transceiver 602 may include a receiver and a transmitter. The receiver may be referred to as a receiver, a receiver circuit, or the like, and is configured to implement a receiving function. The transmitter may be referred to as a transmitter, a transmitter circuit, or the like, and is configured to implement a sending function.

Optionally, the communication apparatus 60 may include one or more memories 604, where a computer program 605 may be stored in the communication apparatus 60, and the computer program may be run on the communication apparatus 60, so that the communication apparatus 60 performs the methods described in the foregoing method embodiments. Optionally, the memory 604 may further store data. The communication apparatus 60 and the memory 604 may be separately disposed, or may be integrated together.

The communication apparatus 60 is a first device, and the processor 601 is configured to perform step S302 in FIG. 3a. The transceiver 602 is configured to perform step S202 in FIG. 2a; or step s1 in FIG. 2b; or step s1' in FIG. 2c; or step S303 in FIG. 3a; or steps S402 and S404 in FIG. 4a.

The communication apparatus 60 is a second device, and the transceiver 602 is configured to perform step S201 in FIG. 2a; or step S301 in FIG. 3a; or step S401 in FIG. 4a.

In an implementation, the processor 601 may include a transceiver configured to implement a receiving function and a sending function. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In an implementation, the processor 601 may store a computer program 606, and the computer program 606 is run on the processor 601, so that the communication apparatus 60 can perform the methods described in the foregoing method embodiments. The computer program 606 may be fixed in the processor 601, and in this case, the processor 601 may be implemented by hardware.

In an implementation, the communication apparatus 60 may include a circuit, and the circuit may implement a sending, receiving, or communication function in the foregoing method embodiments. The processor and the transceiver described in this application may be implemented in an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, or the like. The processor and transceiver may also be fabricated using various IC process technologies, such as complementary metal oxide semiconductor (complementary metal oxide semiconductor, CMOS), n-type metal oxide semiconductor (nMetal-oxide-semiconductor, NMOS), p-type metal oxide semiconductor (positive channel metal oxide semiconductor, PMOS), bipolar junction transistor (bipolar junction transistor, BJT), bipolar CMOS (BiCMOS), silicon germanium (SiGe), and gallium arsenide (GaAs).

The communication apparatus described in the foregoing embodiment may be a first device or a second device. However, a scope of the communication apparatus described in this application is not limited thereto, and a structure of the communication apparatus may not be limited in FIG. 6. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may also include a storage component configured to store data and a computer program;
(3) an ASIC, such as a modem (Modem);
(4) a module that can be embedded in another device;
(5) a receiver, a terminal, an intelligent terminal, a cellular phone, a wireless device, a handheld device, a mobile unit, an in-vehicle device, a network device, a cloud device, an artificial intelligence device, or the like;
(6) others; or the like.

For a case in which the communication apparatus may be a chip or a chip system, refer to a schematic diagram of a structure of a chip shown in FIG. 7. The chip shown in FIG. 7 includes a processor 701 and an interface 702. There may be one or more processors 701, and there may be multiple interfaces 702.

For a case in which the chip is configured to implement a function of the first device in this embodiment of this application:
The processor 701 is configured to invoke the interface 702 to receive a first request from a second device, where the first request includes an identifier of a target remote device, and when the second device is a terminal device, the first request is used by the target remote device to request to access a network; or when the second device is a network element, the first request is for requesting to determine whether the target remote device has permission to access a network; and the processor 701 is further configured to invoke the interface 702 to send first information to the second device, where the first information indicates whether the target remote device has permission to access a network.

In an implementation, the processor 701 may be further configured to determine whether the target remote device has permission to access the network.

In an implementation, the processor 701 may be further configured to: if the identifier of the target remote device exists in the target identifier list, determine that the target remote device has permission to access the network, where the target identifier list includes one or more target identifiers, and the target identifier indicates a remote device that has permission to access the network.

In an implementation, the first request further includes a network identifier; the first information specifically indicates whether the target remote device has permission to access a network indicated by the network identifier; and when the second device is a terminal device, the first request is specifically used by the target remote device to request to access the network indicated by the network identifier; or when the second device is a network element, the first request is specifically for requesting to determine whether the target remote device has permission to access the network indicated by the network identifier.

In an implementation, the processor 701 is further configured to invoke the interface 702 to send an authentication request to the third device, where the authentication request includes an identifier of the target remote device, and the authentication request is for requesting to determine whether the target remote device has permission to access the network. The processor 701 is further configured to invoke the interface 702 to receive authentication result information from the third device, where the authentication result information indicates whether the target remote device has permission to access the network.

In an implementation, when the identifier of the target remote device exists in the target identifier list, the authentication result information indicates that the target remote device has permission to access the network, and the target identifier list includes one or more target identifiers. The target identifier indicates a remote device that has permission to access a network.

In an implementation, the first request and the authentication request each further include a network identifier, and the authentication request is specifically for requesting to determine whether the target remote device has permission to access the network indicated by the network identifier. The first information and the authentication result information each specifically indicate whether the target remote device has permission to access the network indicated by the network identifier; and when the second device is a terminal device, the first request is specifically used by the target remote device to request to access the network indicated by the network identifier; or when the second device is a network element, the first request is specifically for requesting to determine whether the target remote device has permission to access the network indicated by the network identifier.

In an implementation, the first request may be further for requesting to allocate a network address to the target remote device; and when the target remote device has permission to access a network, the first information may include a target network address allocated to the target remote device.

In an implementation, the processor 701 is further configured to invoke the interface 702 to send a network address allocation request to the fourth device, where the network address allocation request is for requesting to obtain network addresses in a first quantity. The processor 701 is further configured to invoke the interface 702 to receive network addresses in a first quantity from the fourth device. The network addresses in the first quantity are sent when the first quantity is less than or equal to a second quantity; the second quantity is a quantity of remote devices that have permission to access the network; and the network addresses in the first quantity include the target network address.

For a case in which the chip is configured to implement a function of the second device in this embodiment of this application:
The processor 701 is configured to invoke the interface 702 to send a first request to a second device, where the first request includes an identifier of a target remote device, and when the second device is a terminal device, the first request is used by the target remote device to request to access a network; or when the second device is a network element, the first request is for requesting to determine whether the target remote device has permission to access a network; and the processor 701 is further configured to invoke the interface 702 to receive first information from the first device, where the first information indicates whether the target remote device has permission to access a network.

In an implementation, the first request further includes an identifier of the network indicated by the local area network identifier; the first request further includes a network identifier; the first information specifically indicates whether the target remote device has permission to access a network indicated by the network identifier; and when the second device is a terminal device, the first request is specifically used by the target remote device to request to access the network indicated by the network identifier; or when the second device is a network element, the first request is specifically for requesting to determine whether the target remote device has permission to access the network indicated by the network identifier.

In an implementation, the first request may be further for requesting to allocate a network address to the target remote device; and when the target remote device has permission to access a network, the first information includes a target network address allocated to the target remote device.

Optionally, the chip further includes a memory 703, and the memory 703 is configured to store a necessary computer program and data.

A person skilled in the art may further understand that various illustrative logical blocks (illustrative logical block) and steps (step) that are listed in this embodiment of this application may be implemented by using electronic hardware, computer software, or a combination thereof. Whether such functions are implemented by using hardware or software depends on particular applications and a design requirement of the entire system. A person skilled in the art may use various methods to implement the described functions for each particular application, but it should not be considered that the implementation goes beyond the scope of this embodiment of this application.

This application further provides a computer-readable storage medium. The computer-readable storage medium stores a computer program, the computer program includes program instructions, and when the program instructions are executed by a computer, a function of any one of the foregoing method embodiments is implemented.

The foregoing computer-readable storage medium includes but is not limited to a flash memory, a hard disk, and a solid-state drive.

This application further provides a computer program product. When the computer program product is executed by a computer, a function of any one of the foregoing method embodiments is implemented.

All or some of the foregoing embodiments may be implemented by using software, hardware, firmware, or any combination thereof. When software is used for implementation, all or some of the foregoing embodiments may be implemented in a form of a computer program product. The computer program product includes one or more computer programs. When the computer program is loaded and executed on a computer, all or some of the procedures or functions according to embodiments of this application are generated. The computer may be a general-purpose computer, a dedicated computer, a computer network, or another programmable apparatus. The computer program may be stored in a computer-readable storage medium, or transmitted from one computer-readable storage medium to another computer-readable storage medium, for example, the computer program may be transmitted from a website, computer, server, or data center to another website, computer, server, or data center in a wired (for example, coaxial cable, optical fiber, digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disk, SSD)), or the like.

A person of ordinary skill in the art may understand that various reference numerals such as "first" and "second" in this application are merely used for differentiation for ease of description, and are not used to limit a scope of embodiments of this application, or represent a sequence.

In this application, "at least one" may alternatively be described as "one or more", and "multiple" may be two, three, four, or more. This is not limited in this application. In embodiments of this application, for a technical feature, technical features in the technical feature are distinguished from each other by using "first", "second", "third", "A", "B", "C", "D", and the like. There is no time or size sequence between the technical features described by the "first", "second", "third", "A", "B", "C", and "D".

Correspondences shown in the tables in this application may be configured, or may be predefined. Values of the information in the tables are merely examples, and other values may be configured. This is not limited in this application. When a correspondence between information and each parameter is configured, not all correspondences shown in the tables need to be configured. For example, in the tables in this application, correspondences shown in some rows may alternatively not be configured. For another example, proper transfigurations and adjustments such as splitting and combination may be performed based on the foregoing tables. A name of a parameter shown in a title of each of the foregoing tables may alternatively be another name that can be understood by a communication apparatus, and a value or representation manner of the parameters may alternatively be another value or representation manner that can be understood by the communication apparatus. During implementation of the foregoing tables, another data structure, such as an array, a queue, a container, a stack, a linear table, a pointer, a linked list, a tree, a graph, a structure, a class, a pile, or a hash table, may alternatively be used.

"Predefine" in this application may be understood as "define", "store", "pre-store", "pre-negotiate", "pre-configure", "solidify", or "pre-burn".

A person of ordinary skill in the art may be aware that units and algorithm steps in the examples described with reference to embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it is not considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An authentication method, wherein the method comprises:
receiving, by a first device, a first request from a second device, wherein the first request comprises an identifier of a target remote device; and when the second device is a terminal device, the first request is used by the target remote device to request to access a network; or when the second device is a network element, the first request is for requesting to determine whether the target remote device has permission to access a network; and
sending, by the first device, first information to the second device, wherein the first information indicates whether the target remote device has permission to access the network.

2. The method according to claim 1, wherein the method further comprises:
determining, by the first device, whether the target remote device has permission to access the network.

3. The method according to claim 2, wherein the determining, by the first device, whether the target remote device has permission to access the network comprises:
if the identifier of the target remote device exists in a target identifier list, determining, by the first device, that the target remote device has permission to access the network, wherein the target identifier list comprises one or more target identifiers; and the target identifier indicates a remote device that has permission to access the network.

4. The method according to any one of claims 1 to 3, wherein the first request further comprises a network identifier; the first information specifically indicates whether the target remote device has permission to access a network indicated by the network identifier; and when the second device is a terminal device, the first request is specifically used by the target remote device to request to access the network indicated by the network identifier; or when the second device is a network element, the first request is specifically for requesting to determine whether the target remote device has permission to access the network indicated by the network identifier.

5. The method according to claim 1, wherein the method further comprises:
sending, by the first device, an authentication request to a third device, wherein the authentication request comprises the identifier of the target remote device; and the authentication request is for requesting to determine whether the target remote device has permission to access the network; and
receiving, by the first device, authentication result information from the third device, wherein the authentication result information indicates whether the target remote device has permission to access the network.

6. The method according to claim 5, wherein when the identifier of the target remote device exists in a target identifier list, the authentication result information indicates that the target remote device has permission to access the network; the target identifier list comprises one or more target identifiers; and the target identifier indicates a remote device that has permission to access the network.

7. The method according to claim 5 or 6, wherein the first request and the authentication request each further comprise a network identifier; the authentication request is specifically for requesting to determine whether the target remote device has permission to access a network indicated by the network identifier; the first information and the authentication result information each specifically indicate whether the target remote device has permission to access the network indicated by the network identifier; and when the second device is a terminal device, the first request is specifically used by the target remote device to request to access the network indicated by the network identifier; or when the second device is a network element, the first request is specifically for requesting to determine whether the target remote device has permission to access the network indicated by the network identifier.

8. The method according to any one of claims 1 to 7, wherein the first request is further for requesting to allocate a network address to the target remote device; and when the target remote device has permission to access the network, the first information comprises a target network address allocated to the target remote device.

9. The method according to claim 8, wherein the method further comprises:
sending, by the first device, a network address allocation request to a fourth device, wherein the network address allocation request is for requesting to obtain network addresses in a first quantity; and
receiving, by the first device, the network addresses in the first quantity from the fourth device, wherein the network addresses in the first quantity are sent when the first quantity is less than or equal to a second quantity; the second quantity is a quantity of remote devices that have permission to access the network; and the network addresses in the first quantity comprise the target network address.

10. An authentication method, wherein the method comprises:
sending, by a second device, a first request to a first device, wherein the first request comprises an identifier of a target remote device; and when the second device is a terminal device, the first request is used by the target remote device to request to access a network; or when the second device is a network element, the first request is for requesting to determine whether the target remote device has permission to access a network; and
receiving, by the second device, first information from the first device, wherein the first information indicates whether the target remote device has permission to access the network.

11. The method according to claim 10, wherein the first request further comprises a network identifier; the first information specifically indicates whether the target remote device has permission to access a network indicated by the network identifier; and when the second device is a terminal device, the first request is specifically used by the target remote device to request to access the network indicated by the network identifier; or when the second device is a network element, the first request is specifically for requesting to determine whether the target remote device has permission to access the network indicated by the network identifier.

12. The method according to claim 10 or 11, wherein the first request is further for requesting to allocate a network address to the target remote device; and when the target remote device has permission to access the network, the first information comprises a target network address allocated to the target remote device.

13. A communication apparatus, comprising a unit configured to perform the method according to any one of claims 1 to 9.

14. A communication apparatus, comprising a unit configured to perform the method according to any one of claims 10 to 12.

15. A communication apparatus, wherein the apparatus comprises a processor and a memory; the memory stores program instructions; and the processor executes the program instructions stored in the memory, to enable the apparatus to perform the method according to any one of claims 1 to 9.

16. A communication apparatus, wherein the apparatus comprises a processor and a memory; the memory stores program instructions; and the processor executes the program instructions stored in the memory, to enable the apparatus to perform the method according to any one of claims 10 to 12.

17. A computer-readable storage medium, wherein the computer-readable storage medium stores a computer program; the computer program comprises program instructions; and when the program instructions are executed by a communication apparatus, the communication apparatus is enabled to perform the method according to any one of claims 1 to 9 or claims 10 to 12.
